# EUROPEAN PATENT APPLICATION

(11) **EP 4 653 851 A1**
(43) Date of publication of application: **26.11.2025**
(21) Application number: 24744898.8
(22) Date of filing: 18.01.2024
(51) Int. Cl.: G01N 21/88, G06F 18/2415, G06F 18/243, G06F 9/30, G06F 40/109, G06N 20/00, G06N 3/0475

(54) **APPARATUS, METHOD AND RECORDING MEDIUM FOR DETERMINING CLASS OF DATA**

(30) Priority: 18.01.2023 US 202363439727 P
(71) Applicant: Koh Young Technology Inc., Seoul 08588 (KR)
(72) Inventor: KANG, Jin Man, San Diego, California 92129 (US); KIM, HwiJun, San Diego, California 92130 (US); SULLIVAN, Kenneth Mark, San Diego, California 92130 (US); RAO, Anjana Vishnumurthi, Poway, California 92604 (US); TALLAPRAGADA, Krishna Sai Rudra Dev, Milpitas, California 95035 (US)
(74) Representative: Meissner Bolte Partnerschaft mbB
(86) International application number: PCT/KR2024/000891
(87) International publication number: WO 2024/155119

(57) **Abstract**

The present invention discloses a technique for determining classes of data. According to the present disclosure, a device comprises one or more processors configured to: obtain first data about a component disposed on a board, determine whether or not a model for a first class corresponding to the first data is stored in the one or more memories, upon a determination that the model for the first class is stored in the one or more memories, determine whether or not the first data corresponds to the first class using the model, upon a determination that the model for the first class is not stored in the one or more memories, determine whether or not the first data corresponds to the first class using second data corresponding to the first class, and transmit information indicating whether or not the first data corresponds to the first class to an external device.

## Description

### TECHNICAL FIELD

This application claims the benefits of U.S. provisional application No. 63/439,727 filed on Jan. 18, 2023, the entire contents of which is incorporated herein by reference.

The present disclosure relates to techniques for determining classes of data.

### BACKGROUND ART

Surface mount technology (SMT) is used to mount one or more components on a board. A large number of components are connected to pads on a board, and the respective components must be disposed in correct positions on the board in order for the components and the pads to be properly connected. An auto optical inspection (AOI) device is able to inspect whether or not the respective components are disposed in the correct positions on the board using optical measurement technology. If the components are disposed in the correct positions on the board, other components can be disposed on the board.

However, if the components are not disposed in the correct positions on the board, the board may be transferred to a review station and re-inspected depending on the inspection results of the auto optical inspection device. At the review station, an operator may re-inspect the components, which are determined to be incorrectly connected to the board by the auto optical device, and make a final determination about whether or not an error has occurred.

### DISCLOSURE

### TECHNICAL PROBLEM

At least one embodiment of the present disclosure provides a technique for more precisely determining classes of data.

At least one embodiment of the present disclosure is able to reduce false calls in which non-defective boards are determined to be defective.

At least one embodiment of the present disclosure is able to reduce the number of boards to be re-inspected at the review station.

At least one embodiment of the present disclosure is able to generate a model for each class and determine the class of input data using the generated model.

At least one embodiment of the present disclosure is able to determine the class of input data even when a model for a class corresponding to the input data is not generated.

### TECHNICAL SOLUTION

According to one aspect of the present disclosure, a device comprises one or more processors; and one or more memories configured to store instructions that, when executed by the one or more processors, cause the one or more processors to perform operations, wherein the one or more processors are configured to: obtain first data about a component disposed on a board, determine whether or not a model for a first class corresponding to the first data is stored in the one or more memories, upon a determination that the model for the first class is stored in the one or more memories, determine whether or not the first data corresponds to the first class using the model, upon a determination that the model for the first class is not stored in the one or more memories, determine whether or not the first data corresponds to the first class using second data corresponding to the first class, and transmit information indicating whether or not the first data corresponds to the first class to an external device.

According to one embodiment of the present disclosure, wherein in determining whether or not the first data corresponds to the first class using the model, the one or more processors are further configured to: calculate a probability that the first data corresponds to the first class using the model, determine whether or not the probability is greater than or equal to a predetermined reference probability, if the probability is greater than or equal to the predetermined reference probability, determine that the first data corresponds to the first class, and if the probability is less than the predetermined reference probability, determine that the first data does not correspond to the first class.

According to one embodiment of the present disclosure, wherein the predetermined reference probability is determined using an average value between a minimum value of probabilities of one or more pieces of data determined to correspond to the first class and a maximum value of probabilities of one or more pieces of data determined not to correspond to the first class.

According to one embodiment of the present disclosure, wherein the one or more processors are further configured to: calculate a similarity between the first data and the second data using a machine learning algorithm, upon the determination that the model for the first class is not stored in the one or more memories, and determine whether or not the first data corresponds to the first class based on the similarity between the first data and the second data.

According to one embodiment of the present disclosure, wherein the machine learning algorithm includes ArcFace (additive angular margin loss).

According to one embodiment of the present disclosure, wherein the machine learning algorithm is trained using a plurality of pieces of randomly generated virtual data and the second data.

According to one embodiment of the present disclosure, wherein the plurality of pieces of virtual data are generated by adjusting the sizes, fonts, and thicknesses of letters in one or more pieces of real data stored in the one or more memories, and adding blur and defects thereto.

According to one embodiment of the present disclosure, wherein the plurality of pieces of virtual data are generated using at least one algorithm among GAN (generative adversarial networks) or stable diffusion.

According to one embodiment of the present disclosure, wherein the one or more processors are further configured to: obtain a training request for the first data, upon obtaining the training request, determine whether or not the model for the first class is stored in the one or more memories, upon the determination that the model for the first class is not stored in the one or more memories, add the first data to a training queue for generation or training of the model, and upon the determination that the model for the first class is stored in the one or more memories, add the first data to the training queue if the model for the first class satisfies predetermined conditions.

According to one embodiment of the present disclosure, wherein when adding the first data to the training queue according to the determination that the model for the first class is not stored in the one or more memories, the one or more processors are further configured to add the first data to the training queue if the number of one or more pieces of data corresponding to the first class, stored in the one or more memories, is greater than a predetermined value and if the first data does not exist in the training queue.

According to one embodiment of the present disclosure, wherein the predetermined conditions are satisfied if the number of times the model determines that data not corresponding to the first class corresponds to the first class is greater than a first threshold, or if the number of times the model determines that data corresponding to the first class does not correspond to the first class is greater than a second threshold.

According to one embodiment of the present disclosure, wherein the one or more processors are further configured such that the model is trained using a data set comprising data corresponding to one or more classes similar to the first class and randomly selected data.

According to one embodiment of the present disclosure, wherein a ratio of data corresponding to one or more classes similar to the first class in the data set is less than or equal to a ratio of the randomly selected data in the data set.

According to one embodiment of the present disclosure, wherein the external device is a display, and wherein the one or more processors are further configured to output, to the display, a phrase indicating that it is impossible to determine whether or not the first data corresponds to the first class according to determination that the model for the first class and the second data corresponding to the class are not stored in the one or more memories.

According to one embodiment of the present disclosure, wherein the model includes a feature extractor and a classifier.

According to one embodiment of the present disclosure, wherein the feature extractor is commonly applied to models stored in the one or more memories, and wherein the classifier is trained based on different information between the models stored in the one or more memories.

According to one embodiment of the present disclosure, wherein the feature extractor is trained using a plurality of pieces of randomly generated virtual data.

According to one embodiment of the present disclosure, wherein the feature extractor and the classifier operate on a GPU (graphics processing unit), and wherein the one or more processors are further configured to: load a classifier, included in a model of a class used with a frequency equal to or greater than a predetermined value from the memory, to a cache of the GPU, and determine whether or not data corresponds to a class using the feature extractor and the classifier loaded into the cache.

According to one embodiment of the present disclosure, wherein the one or more processors are further configured to select a least-used classifier from among one or more classifiers loaded into the cache and remove the same from the cache.

According to one embodiment of the present disclosure, wherein the one or more processors are further configured to: transmit information indicating that the first data does not correspond to the first class to a review station upon determination that the first data does not correspond to the first class.

According to one embodiment of the present disclosure, a method performed in a device comprises one or more processors and one or more memories storing instructions to be executed by the one or more processors, the method comprising: obtaining first data indicating a component disposed on a board; determining whether or not a model for a first class corresponding to the first data is stored in the one or more memories; upon the determination that the model for the first class is stored in the one or more memories, determining whether or not the first data corresponds to the first class using the model; upon the determination that the model for the first class is not stored in the one or more memories, determining whether or not the first data corresponds to the first class using second data corresponding to the first class; and transmitting information indicating whether or not the first data corresponds to the first class to an external device.

According to one embodiment of the present disclosure, a non-transitory computer-readable recording medium having recorded instructions that, when executed by one or more processors, cause the one or more processors to perform operations, wherein the instructions cause the one or more processors to: obtain first data indicating a component disposed on a board; determine whether or not a model for a first class corresponding to the first data is stored in one or more memories; upon the determination that the model for the first class is stored in the one or more memories, determine whether or not the first data corresponds to the first class using the model; upon the determination that the model for the first class is not stored in the one or more memories, determine whether or not the first data corresponds to the first class using second data corresponding to the first class; and transmit information indicating whether or not the first data corresponds to the first class to an external device.

### ADVANTAGEOUS EFFECTS

According to at least one embodiment of the present disclosure, it is possible to provide a technique for more precisely determining the class of data.

According to at least one embodiment of the present disclosure, it is possible to reduce false calls in which non-defective boards are determined to be defective.

According to at least one embodiment of the present disclosure, it is possible to reduce the number of boards to be re-inspected at the review station.

According to at least one embodiment of the present disclosure, it is possible to generate a model for each class and determine the class of input data using the generated model.

According to at least one embodiment of the present disclosure, it is possible to determine the class of input data even if a model for the class corresponding to the input data is not generated.

The effects of the present disclosure are not limited to the effects mentioned above, and other effects not mentioned may be clearly understood by those skilled in the art from the description of this specification.

### DESCRIPTION OF DRAWINGS

FIG. 1 is a block diagram of an electronic device according to an embodiment of the present disclosure.
FIG. 2 is a block diagram of a model according to an embodiment of the present disclosure.
FIG. 3A illustrates a process of training a machine learning algorithm according to an embodiment of the present disclosure.
FIG. 3B illustrates a process of determining whether or not input data corresponds to a class according to an embodiment of the present disclosure.
FIG. 4 illustrates virtual data according to an embodiment of the present disclosure.
FIG. 5 illustrates a comparison data set generated to learn input data according to an embodiment of the present disclosure.
FIG. 6 illustrates a re-inspection process at a review station according to an embodiment of the present disclosure.
FIG. 7 is a block diagram of a model operating on a GPU according to an embodiment of the present disclosure.
FIG. 8 illustrates an embodiment of determining a reference probability in an electronic device according to an embodiment of the present disclosure.
FIG. 9 is a flowchart illustrating a method of determining whether or not first data corresponds to a first class in an electronic device according to an embodiment of the present disclosure.
FIG. 10 is a flowchart illustrating a method of generating or re-training a model for a first class in an electronic device according to an embodiment of the present disclosure.

### MODE FOR INVENTION

Various embodiments of the present disclosure are illustrated for describing the technical spirit of the present disclosure and are not intended to limit the present disclosure to specific embodiments. The technical spirit of the present disclosure includes various modifications, equivalents, and alternatives of the respective embodiments described in the present disclosure, and embodiments resulting from combinations of all or some of the respective embodiments. In addition, the scope of the technical spirit of the present disclosure is not limited to the various embodiments described below or to the detailed descriptions thereof.

All technical or scientific terms used herein have meanings that are generally understood by a person having ordinary knowledge in the art to which the present disclosure pertains, unless otherwise specified.

The expressions "include", "may include", "provided with", "may be provided with", "have", "may have", and the like used herein indicate the presence of relevant features (e.g., functions, operations, or components) and do not exclude the presence of other additional features. That is, such expressions should be understood as open-ended terms connoting the possibility of inclusion of other embodiments.

A singular expression used herein may include meanings of plurality, unless otherwise mentioned, and the same is applied to a singular expression stated in the claims.

The terms "first", "second", etc. used herein are used to identify a plurality of components from one another, unless otherwise mentioned, and are not intended to limit the order or importance of the relevant components.

The expressions "A, B, and C", "A, B, or C", "A, B, and/or C", "at least one of A, B, and C", or "at least one of A, B, or C" as used in the present disclosure may indicate each of the listed items or all possible combinations of the listed items. For example, "at least one of A or B" may refer to (1) at least one A, (2) at least one B, or (3) at least one A and at least one B.

The expression "based on" used herein is used to describe one or more factors that influences a decision, an action of judgment, or an operation described in a phrase or sentence including the relevant expression, and this expression does not exclude additional factor influencing the decision, the action of judgment or the operation.

The expression that a certain component (e.g., first component) is "coupled to" or "connected to" another component (e.g., second component), which is used herein, may indicate that the certain component is coupled or connected directly to the other component or that the certain component is coupled or connected to the other component via another component (e.g., third component).

The expression "configured to" as used in the present disclosure may indicate, depending on the context, "set to", "having the ability to", "modified to", "made to", "capable of", or the like. This expression is not limited to the meaning of "specifically designed in hardware", and for example, a processor configured to perform a specific operation may indicate a genericpurpose processor capable of performing the specific operation by executing software.

Hereinafter, various embodiments of the present disclosure will be described with reference to the attached drawings. In the attached drawings and the description of the drawings, identical or substantially equivalent components may be assigned the same reference numerals. In addition, in the description of various embodiments below, redundant descriptions of identical or corresponding components may be omitted, but this does not indicate that the corresponding components are not included in the embodiment.

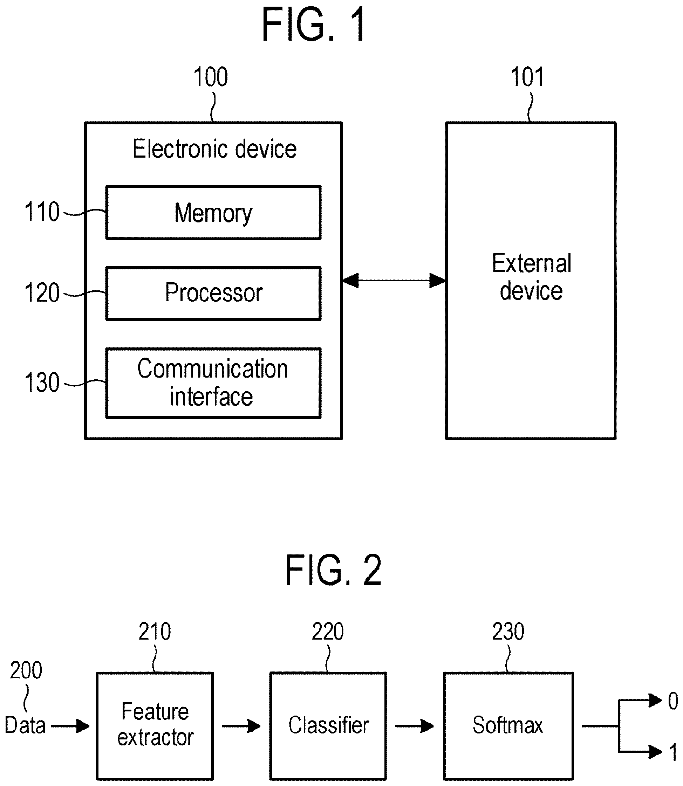

FIG. 1 is a block diagram of an electronic device according to an embodiment of the present disclosure. According to an embodiment, the electronic device 100 may include a memory 110, a processor 120, and/or a communication interface 130. In a certain embodiment, at least one of the components of the electronic device 100 may be omitted, or other components may be added to the electronic device 100. In a certain embodiment, additionally or alternatively, some of the components may be implemented in an integrated form or implemented as a single or multiple entities.

At least some of the internal or external components of the electronic device 100 may be interconnected through buses, GPIOs (general-purpose input/outputs), SPIs (serial peripheral interfaces), MIPIs (mobile industry processor interfaces), or the like to exchange data or signals.

The processor 120 may control at least one component of the electronic device 100 connected to the processor 120 by executing software. In addition, the processor 120 may perform various operations such as computation, processing, generation and processing of data, or the like related to the present disclosure. In addition, the processor 120 may load data or the like from the memory 110 or store them in the memory 110. In an embodiment, the processor 120 may receive, as input data, an image of each component disposed on a board and determine whether or not the component is disposed in a correct position on the board. The component may indicate one or more parts disposed on the board.

The memory 110 may store various data. The data stored in the memory 110 is data acquired, processed, or used by at least one component of the electronic device 100, and may include software. The memory 110 may include volatile and/or nonvolatile memory.

The communication interface 130 may perform wireless or wired communication between the electronic device 100 and a server or between the electronic device 100 and other external electronic devices. For example, the communication interface 130 may perform wireless communication according to schemes such as LTE (long-term evolution), LTE-A (LTE Advance), CDMA (code division multiple access), WCDMA (wideband CDMA), WiBro (wireless broadband), Wi-Fi (wireless fidelity), Bluetooth, NFC (near-field communication), GPS (global positioning system), or GNSS (global navigation satellite system). For example, the communication interface 130 may perform wired communication according to methods such as USB (universal serial bus), HDMI (high-definition multimedia interface), RS-232 (recommended standard 232), or POTS (plain old telephone service). The communication interface 130 may be omitted depending on the embodiment.

In an embodiment, the electronic device 100 may communicate with an external device 101 directly or through a server. The external device 101 may be the same type of device as or different from the electronic device 100. All or some of the operations performed in the electronic device 100 may be performed in the external device 101. In an embodiment, the electronic device 100 may transmit the results of performed operations to the external device 101. The external device 101 may perform subsequent operations using transmitted data or the like. According to an embodiment, the external device 101 may be a server inside a review station. According to an embodiment, in the case where the electronic device is an auto optical inspection device, light or pattern light emitted from a lighting unit in the auto optical inspection device may be radiated onto an inspection target, and the light reflected from the inspection target (e.g., PCB or component) may be received by an photographing unit, thereby obtaining an image of the inspection target. Thereafter, the auto optical inspection device may perform a primary inspection on the image of the inspection target according to preset reference information and determine whether the inspection target is good (GOOD) or bad (NG). In this case, if the inspection target is determined to be good, the inspection target is transferred to the next line in the SMT line, and if the inspection target is determined to be bad, the image of the inspection target may be re-inspected in the auto optical inspection device or transmitted to the server of the review station to perform re-inspection by the server.

For example, in the first inspection, it may be determined whether or not the target character is recognized in the inspection image through optical character recognition (OCR) or optical character verification, thereby determining whether the target is good or bad, and in the re-inspection, the similarity of the image may be determined.

That is, the server of the review station may receive an inspection result for data from the electronic device 100 and output the same on a display such that the operator in the review station may perform re-inspection of the inspection result. The review station server may finally determine whether or not the data corresponds to a class based on the re-inspection result for the data. The re-inspection of the data performed in the review station may be performed manually by the operator.

The processor 120 may obtain input data regarding the component disposed on the board. The component may indicate one or more parts disposed on the board. Respective components may have determined positions for placement on the board. For example, the first component must be disposed at a first position on the board, and the second component must be disposed at a second position on the board. The data may indicate an image including information about the shape and size of the component, and letters, numbers, or symbols written on the inspection target such as the component or PCB. Alternatively, the data may indicate an image including a crack shape of the component, foreign substances, solder fillets, solder bridges, lead lift, and component or lead offset.

According to an embodiment, the processor 120 may perform an operation of determining a class of the obtained data. Each piece of data may correspond to one class. The class is a data classification corresponding to a specific component, may be generated for each component, and may include one or more pieces of data corresponding to one component. For example, a first class corresponding to the first component may include first data and second data of the first component, and a second class corresponding to the second component may include third data and fourth data of the second component. According to an embodiment, the data may be an image of the component. For example, the first data and the second data may be images of the first component, and the third data and the fourth data may be images of the second component. Hereinafter, for convenience of explanation, input data will be described as data corresponding to the first class.

The processor 120 may identify whether or not a model for a class corresponding to the obtained input data is stored in the memory 110. The processor 120, in response to obtaining input data, may identify whether or not a model for the first class is stored in the memory 110. The model may indicate an algorithm (e.g., OC-CNN (one class convolutional neural network) for determining whether the input data corresponds to a specific class, and different models may be generated and stored between respective classes. For example, if a first model for the first class is stored in the memory 110, the processor 120, using the first model, may determine that the first data corresponds to the first class and determine that the third data does not correspond to the first class.

According to an embodiment, the model for each class may calculate a probability that the input data corresponds to the class. For example, the probability that the first input data corresponds to the first class may be calculated as 0.6, and the probability that the second input data corresponds to the first class may be calculated as 0.9. The processor 120 may determine a reference probability for determining whether or not the data corresponds to the class, and compare the probability calculated by the model with the reference probability to determine whether or not the input data corresponds to the class. The processor 120 may determine that the input data corresponds to the class if the probability calculated by the model is greater than or equal to the reference probability, and may determine that the input data does not correspond to the class if the probability calculated by the model is less than the reference probability. For example, if the processor 120 determines the reference probability as 0.8, the first input data may be determined not to correspond to the first class, and the second input data may be determined to correspond to the first class. The processor 120 may accumulate and store the determination results for multiple data input as described above. That is, the model may accumulate and store the probabilities calculated for respective pieces of input data and the results of determining whether the data corresponds to the corresponding class.

According to an embodiment, the processor 120 may determine a reference probability of each class based on the accumulated determination results. The processor 120 may calculate the average value between the minimum value among the probabilities calculated for the data corresponding to the relevant class and the maximum value among the probabilities calculated for the data not corresponding to the relevant class. The processor may determine the higher value of the average value and a predetermined threshold probability as the reference probability. For example, when determining whether or not input data corresponds to the first class, the probability of the first input data, which is determined not to correspond to the first class, is 0.4, the probability of the second input data is 0.6, the probability of the third input data, which is determined to correspond to the first class, is 0.9, the probability of the fourth input data is 0.98, and the threshold probability may be determined as 0.7. In this case, the highest value of the probabilities calculated for the input data determined not to correspond to the first class is 0.6 of the second input data, and the lowest value of the probabilities calculated for the input data determined to correspond to the first class is 0.9 of the third input data. Since the average of the two values is 0.75, which is higher than the threshold probability of 0.7, the processor 120 may determine the reference probability as 0.75. On the other hand, if the determined average of the two values is lower than 0.7, the processor 120 may determine the reference probability as 0.7.

If the first model is not stored in the memory 110, the processor 120 may identify whether or not one or more pieces of data corresponding to the first class are stored in the memory 110. If one or more pieces of data corresponding to the first class are stored, the processor 120 may use the stored data to determine whether or not the input data corresponds to the first class. In other words, even if the first model is not generated, the processor 120 may determine whether or not the input data corresponds to the first class using the stored data. According to an embodiment, the processor 120 may determine whether or not the input data corresponds to the first class using machine learning algorithms (e.g., metric learning and ArcFace (additive angular margin loss)). The metric learning algorithm is a machine learning algorithm for calculating the similarity between two pieces of input data to determine whether or not the two pieces of input data are similar. The processor 120 may determine whether or not the input data corresponds to the first class using the metric learning algorithm even if the first model is not generated. For example, the processor 120 may calculate the similarity between the first data or second data corresponding to the first class and the input data and, if the calculated similarity is equal to or greater than a predetermined value, determine that the input data corresponds to the first class.

On the other hand, if the data corresponding to the first class is not stored, the processor 120 may output information indicating that the class of the first data is unable to be determined. For example, the processor 120 may output a phrase indicating that the class of the first data is unable to be determined (e.g., Model not found) to an external device, and the external device may be a display.

Hereinafter, a method of generating a model for each class will be described. For convenience of explanation, the description will be made on the assumption that data corresponding to the first class is received. The processor 120 may obtain a training request for the input data from a training server. The training server is a configuration introduced to learn input data in the electronic device 100 and, upon receiving input data, may transmit a request for initial training or a request for fine tuning to the processor.

Upon obtaining a training request, the processor 120 may identify whether or not the first model is stored in the memory 110. If the first model is not stored, the processor 120 may add the input data to the training queue in order to generate a model. According to an embodiment, the processor 120 may sequentially learn data included in the training queue and generate a model for a class. This model generation process corresponds to the initial training process, and if not much data is input and not many models are generated, most training requests from the training server may be requests for the initial training process. According to an embodiment, if a predetermined number or more of (e.g., 50 or 100) pieces of data corresponding to the first class are stored and if there is no data corresponding to the first class in the training queue, the processor 120 may add the input data to the training queue for generating the first model. This is due to the fact that a predetermined number or more of pieces of data are required to generate a model with high accuracy, and if input data for generating the first model already exists in the training queue, there is no need for redundant training. According to an embodiment, if a predetermined number or more of pieces of data corresponding to the first class are stored, but if there is already data corresponding to the first class in the training queue, or if there is no data corresponding to the first class in the training queue but there is less than a predetermined number of pieces of data corresponding to the first class, the processor may not add the input data to the training queue even if a training request is received.

If the first model is stored, the processor 120 may add the input data to the training queue in order to re-train the currently generated model using the input data. This process may correspond to fine tuning. According to an embodiment, the processor 120 may make a decision to re-train the current model depending on the number of errors that occur in the results of determining whether or not the respective pieces of data correspond to the first class using the first model. For example, the processor 120 may determine to re-train the first model based on the number of first errors in which the data that does not correspond to the first class is determined to be correspond to the first class and the number of second errors in which the data that corresponds to the first class is determined not to correspond to the first class, among the results of determining whether or not the input data corresponds to the first class using the first model. For example, the processor 120 may determine to re-train the first model if the number of first errors exceeds a predetermined value (e.g., 20) or if the number of second errors exceeds a predetermined value (e.g., 100).

The processor 120 may generate a comparison data set to learn the input data. In order to increase the accuracy of the generated model, the processor 120 may generate a comparison data set including data (hereinafter, similar data) having similar features to the input data. The similar data indicates data in which differences between the input data and the overall size of the data and between the input data and the sizes of characters included in the data are equal to or less than a predetermined value, or data in which a difference between the input data and the number of strokes of characters included in the data is equal to or less than a predetermined value. For example, if the input data is "188", the comparison data set may be generated as similar data having similar visual features, such as "100", "168", "186", and "180". The processor 120 may learn the input data using the comparison data set so that the generated model is able to more accurately determine whether or not the input data corresponds to the class.

According to an embodiment, the processor 120 may determine the ratio of the similar data to the comparison data set. For example, the processor 120 may determine the ratio of the similar data to the comparison data set as a predetermined value (e.g., 25%) and determine the remaining as random data. The processor 120 may extract the features of the input data using the randomly determined data, and compare the input data with the similar data, thereby extracting the features of the input data more precisely. Through this, a model capable of more accurately determining data corresponding to the class may be generated.

The electronic device 100 according to various embodiments of the present disclosure may be a device of various forms. For example, the electronic device 100 may be a portable communication device, a computer device, a portable multimedia device, a wearable device, a home appliance, an AOI disposed at a mounter or the rear of a reflow in the SMT line, a review station linked to the AOI, a smart factory monitoring system linked to the SMT line, or a combination of one or more devices described above. The electronic device 100 of the present disclosure is not limited to the devices described above.

FIG. 2 is a block diagram of a model according to an embodiment of the present disclosure. Referring to FIG. 2, the model may include a feature extractor 210, a classifier 220, and a softmax 230. Different models may be generated between classes, and the model may be generated based on the input data 200 as described above in FIG. 1. According to an embodiment, a plurality of models may share the same feature extractor 210, but may include different classifiers 220. For example, a first model for a first class may include a common feature extractor 210 and a first classifier, and a second model for a second class may include the common feature extractor 210 and a second classifier.

The feature extractor 210 may extract features of the data 200 to determine whether or not the input data 200 corresponds to the first class. The feature extractor 210 may be trained using a plurality of pieces of input data 200 or virtual data. The feature extractor 210 is configured to extract features of the input data 200, and needs to be trained using a large amount of data. The feature extractor 210 may be trained using a plurality of pieces of virtual data generated based on the input data. The virtual data may be data that does not actually exist but is generated for training the feature extractor 210. According to an embodiment, the virtual data used to train the feature extractor 210 may be generated by the processor.

The classifier 220 may output a value indicating whether or not the input data 200 corresponds to the first class based on the features of the data 200 extracted by the feature extractor 210. The classifier 220 may be trained using a plurality of pieces of data corresponding to the first class. For example, the classifier 220 may output a value indicating whether or not the features of input data 200 are similar to the features of the first class.

The softmax 230 is an activation function that normalizes a value input from the classifier 220 to a value between 0 and 1 and outputs it. The softmax 230 may process a value obtained from the classifier 220 and output a probability that the input data 200 corresponds to a specific class.

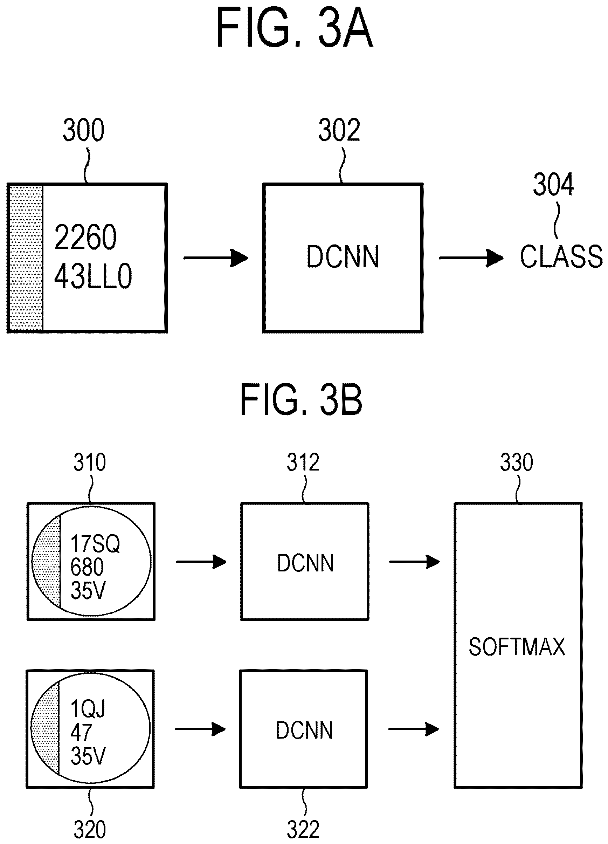

FIG. 3A illustrates a process of training a machine learning algorithm according to an embodiment of the present disclosure. FIG. 3B illustrates a process of determining whether or not input data corresponds to a class according to an embodiment of the present disclosure. FIGS. 3A and 3B illustrate a process of determining a class of input data 320 using a machine learning algorithm in the case where a model is not generated for the first class. Referring to FIG. 3A, the machine learning algorithm may be trained based on data 300 corresponding to the first class. For example, the machine learning algorithm may be trained about the features of the first class by learning the first data 300 corresponding to the first class. Referring to FIG. 3B, the machine learning algorithm may generate a representative image 310 based on the trained features of the first class and compare an input image 320 with the representative image 310 to determine whether or not the input image 320 corresponds to the first class. For example, the machine learning algorithm may determine whether or not the representative image 310 of the first class and the input image 320 share similar features. For example, the machine learning algorithms 312 and 322 may receive the input image 320 and the representative image 310, extract the features of the representative image 310, and extract the features of the input image 320. The softmax 330 may obtain the features of the representative image 310 and the input image 320 from the machine learning algorithms 312 and 322, and determine whether or not the input image 320 corresponds to the first class.

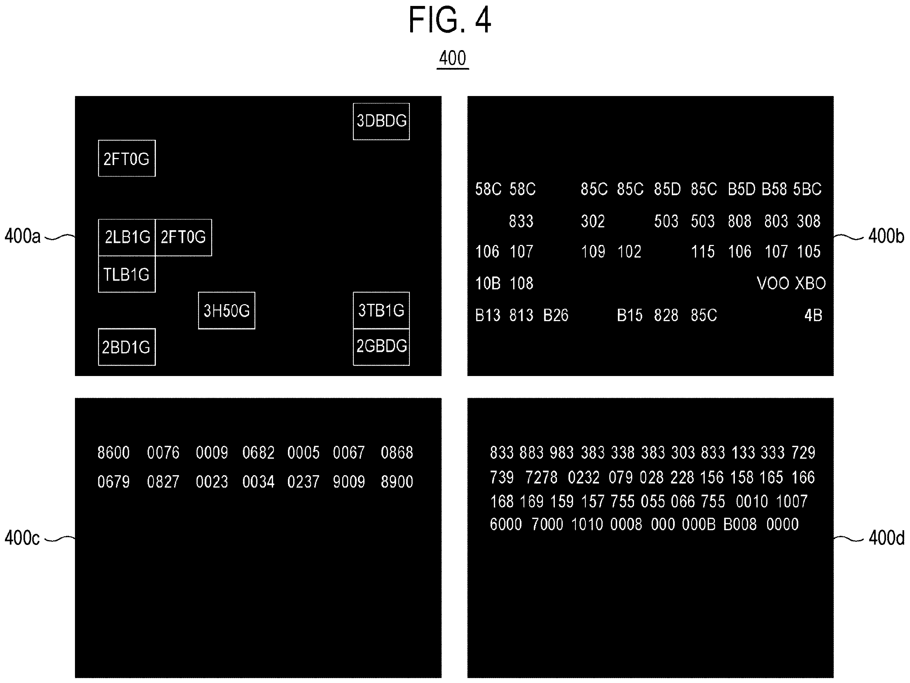

FIG. 4 illustrates virtual data according to an embodiment of the present disclosure. The virtual data may be used to train the feature extractor commonly included in the respective models and the machine learning algorithm for determining whether or not data corresponds to a class before the model is generated. According to an embodiment, the virtual data may be generated by adjusting the sizes, fonts, and thicknesses of letters in real data and adding blur and defects. The virtual data may be generated using at least one algorithm among GAN (generative adversarial networks) and stable diffusion. According to an embodiment, the virtual data may be generated by the processor of the electronic device 100. Referring to FIG. 4, a plurality of pieces of virtual data 400a, 400b, 400c, and 400d may be generated by modifying the sizes and fonts of letters in images actually stored in the memory, or adding blur and defects thereto.

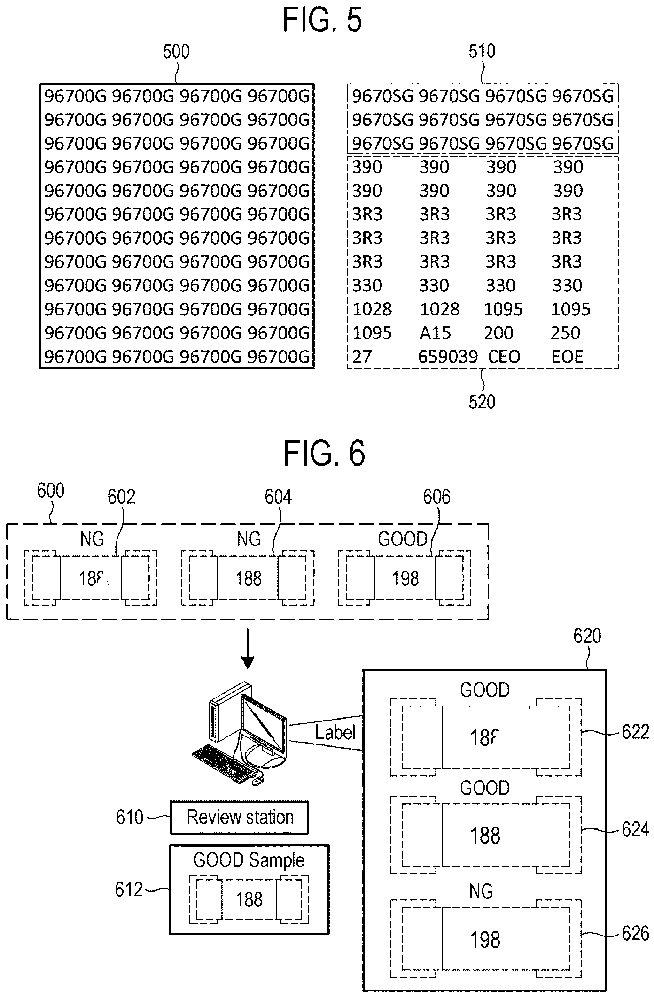

FIG. 5 illustrates a comparison data set generated to learn input data according to an embodiment of the present disclosure. The processor may generate a comparison data set 510 and 520 to learn input data 500. The processor may generate a comparison data set 510 and 520 including similar data 510 having similar features to the input data 500 and randomly selected data 520. For example, referring to FIG. 5, the processor may generate a comparison data set 510 and 520 including similar data 510 "9670SG" having similar visual features to the input data 500 "96700G". An example of the similar data 510 included in the comparison data set 510 and 520 is not limited to what is shown in FIG. 5. The data 520 excluding the similar data 510 in the comparison data set 510 and 520 may be randomly selected from data stored in the memory. The model may be trained using the comparison data set 510 and 520, thereby more accurately determining whether or not the input data 500 corresponds to the class.

FIG. 6 illustrates a re-inspection process at a review station according to an embodiment of the present disclosure. The processor may determine whether or not the input data corresponds to the first class according to the descriptions in FIGS. 1 to 5 and, if the input data does not correspond to the first class, transmit an inspection result for the input data to the review station 610. The review station 610 may re-examine the inspection result 600 of the processor for the input data based on a sample 612 for the data corresponding to the first class. According to an embodiment, in the review station 610, the operator may directly compare the sample 612 and the input data to re-examine the inspection result 600 of the processor.

The review station 610 may receive the inspection result 600 for the input data from the processor. For example, an inspection result 600 in which the first input data 602 and the second input data 604 are determined not to correspond to the first class and in which the third input data 606 is determined to correspond to the first class. The review station 610 may re-examine whether or not the above determination was made correctly based on the data sample 612. For example, as a re-inspection result 620, the first input data 622 may be determined to correspond to the first class because it matches the sample 612 even if it has defects, and the second input data 624 may also be determined to correspond to the first class because it matches the sample 612. In addition, the third data 626 may be determined not to correspond to the first class because it does not match the sample 612, unlike the inspection result 600 of the processor in which the third data 626 is determined to correspond to the first class.

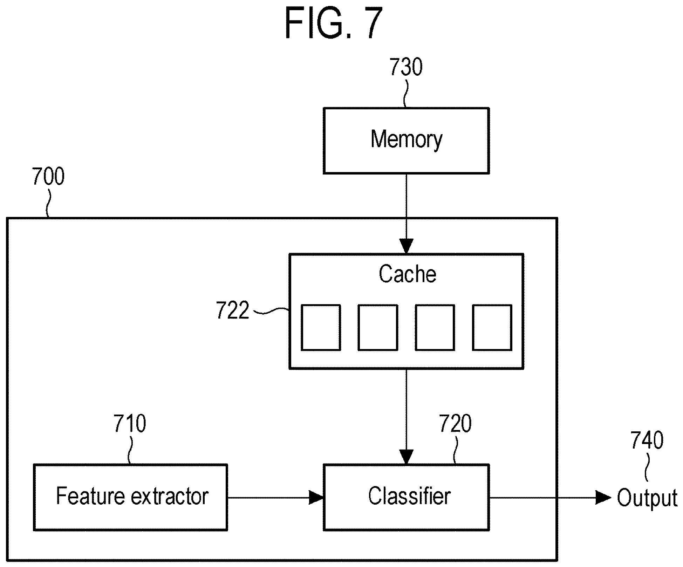

FIG. 7 is a block diagram of a model operating on a GPU according to an embodiment of the present disclosure. The model for determining whether or not the input data corresponds to the class may operate on a GPU 700. That is, the model may output a determination result 740 indicating whether or not the input data corresponds to the class using a feature extractor 710 and a classifier 720 operating on the GPU 700. However, since the capacity of the GPU 700 is limited, it may be difficult to load and use the classifiers of all models on the GPU 700 at once. Therefore, in order to reduce the capacity of the GPU 700, the classifiers of the models, which are used more frequently than a predetermined frequency, may be loaded from the memory 730 to the cache 722 of the GPU 700. For example, if 100 classifiers are able to be stored in the cache 722 on the GPU 700, the processor may load 100 classifiers from the memory 730 to the cache 722 in order of high frequency of use, starting from the most frequently used model among a plurality of models.

In an embodiment, the processor may remove the classifier of the least-used model from the cache 722 based on the usage frequency of the classifier. For example, if a classifier that is not loaded into the cache 722 is required in the state where 100 classifiers are loaded into the cache 722, the processor may remove the least-used classifier among the classifiers loaded into the cache 722 and load the required classifier from the memory 730 into the cache 722.

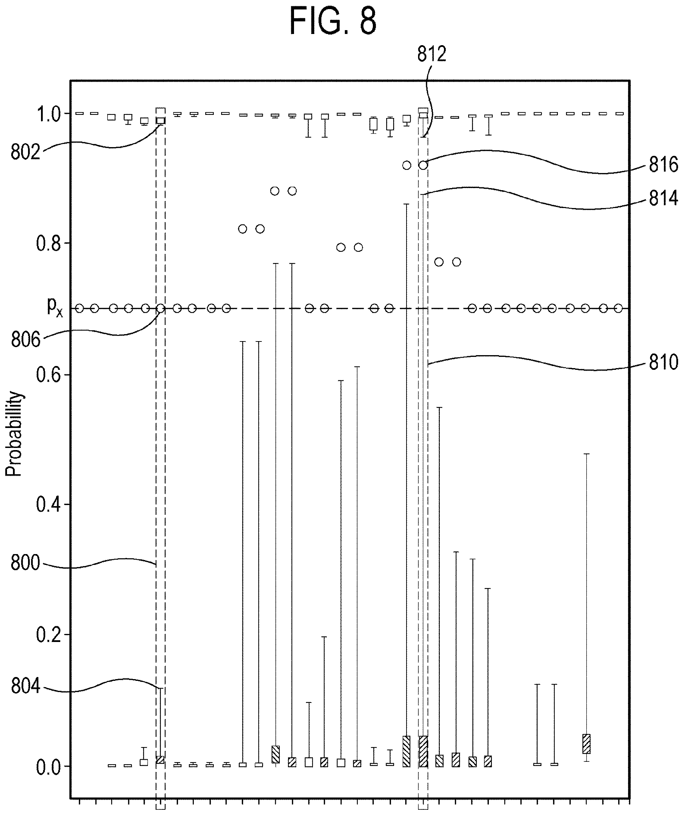

FIG. 8 illustrates an embodiment of determining a reference probability in an electronic device according to an embodiment of the present disclosure. In the graph of FIG. 8, the horizontal axis represents classes, and the vertical axis represents probabilities calculated when a plurality of pieces of input data are input to the models of respective classes. The vertical lines in the graph may represent probability values calculated by the models of the respective classes for a plurality of pieces of input data, and the bars located at the bottom and top of the vertical lines may represent sections where most of the probability values are distributed (e.g., sections where the top 25% to 75% of data are distributed). In addition, the bubble indicated for each class represents the reference probability for the model of the corresponding class. That is, a reference probability for the model of the first class 800 may be the value Px indicated by the first bubble 806, and a reference probability for the model of the second class 810 may be the value (0.9) indicated by the second bubble 816.

The processor may determine the reference probabilities of the respective models based on output values of a plurality of pieces of input data for the respective models. The probability values output by inputting the plurality of pieces of input data to the models may be accumulated and stored in the memory. The processor may determine, as the reference probability, the higher value among the average value between the minimum value of the probability values of the input data determined to correspond to the first class 800 and the maximum value of the probability values of the input data determined not to correspond to the first class 800, and a predetermined threshold probability Px. For example, referring to FIG. 8, among the data input to the first model, the maximum value 802 of the probability values of the input data determined not to correspond to the first class 800 is 0.1, and the minimum value 804 of the probability values of the input data determined to correspond to the first class 800 is 0.99, so the average value between the two values is approximately 0.5. Among the data input to the second model, the maximum value 812 of the probability values of the input data determined not to correspond to the second class 810 is 0.86, and the minimum value 814 of the probability values of the input data determined to correspond to the second class 810 is 0.98, so the average value 816 between the two values is approximately 0.9. Since the threshold probability Px is approximately 0.7, the processor may determine the reference probability for the model of the first class 800 as 0.7 and the reference probability for the model of the second class 810 as 0.9. According to an embodiment, the processor may reset the reference probability every time the model is generated or re-trained. According to another embodiment, the processor may reset the reference probability at a predetermined time interval.

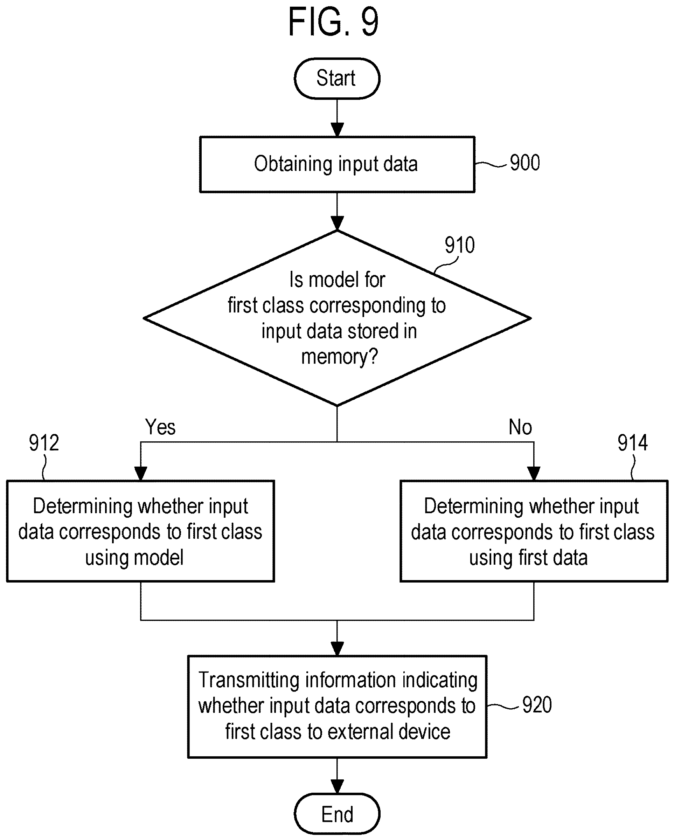

FIG. 9 is a flowchart illustrating a method of determining whether or not first data corresponds to a first class in an electronic device according to an embodiment of the present disclosure. In operation 900, the electronic device may obtain input data. For example, the input data may be an image of components arranged on a board.

In operation 910, the electronic device 100 may identify whether or not a model for the first class corresponding to the first data is stored in the memory 110. If the first model is stored, the electronic device 100 may determine whether or not the first data corresponds to the first class using the first model in operation 912. If the first model is not stored, the electronic device 100 may determine whether or not the input data corresponds to the first class based on the first data corresponding to the first class in operation 914.

The electronic device 100 may transmit information indicating whether or not the first data corresponds to the first class to the external device 101 in operation 920. The electronic device 100 may determine whether or not the first data corresponds to the first class and transmit a test result to the review station 610.

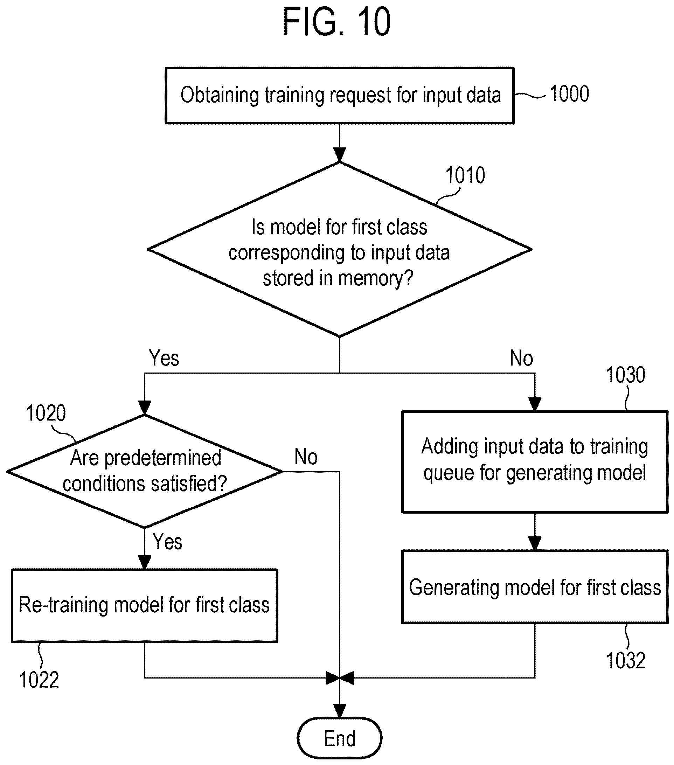

FIG. 10 is a flowchart illustrating a method of generating or re-trainning a model for a first class in an electronic device according to an embodiment of the present disclosure. The electronic device 100 may obtain a training request for the input data in operation 1000. When obtaining the training request, the electronic device 100 may identify whether or not a model for the first class corresponding to the input data is stored in the memory 110 in operation 1010.

If the first model is stored in the memory 110, the electronic device 100 may identify whether or not a predetermined condition is satisfied in operation 1020. According to an embodiment, the electronic device 100 may make a decision to re-train the current model based on the number of errors that occur in the result of determining whether or not each piece of data corresponds to the first class using the first model. In operation 1022, the electronic device 100 may determine to re-train the first model based on the number of first errors in which the data that does not correspond to the first class is determined to be correspond to the first class and the number of second errors in which the data that corresponds to the first class is determined not to correspond to the first class, among the results of determining whether or not the input data corresponds to the first class using the first model. If predetermined conditions are not satisfied, the electronic device 100 may not re-train the first model.

If the first model is not stored in the memory 110, the electronic device 100 may add the input data to the training queue for generating the first model in operation 1030. According to an embodiment, if a predetermined number or more of (e.g., 100) pieces of data corresponding to the first class are stored and if there is no data corresponding to the first class in the training queue, the electronic device 100 may add the input data to the training queue. The electronic device 100 may generate a model for the first class in operation 1032.

Although respective steps of the method or algorithm according to the present disclosure are illustrated in a sequential order in the flowcharts illustrated in FIGS. 9 and 10, the respective steps may be performed in an order in which the steps may optionally be combined by the present disclosure, in addition to being performed sequentially. The description with reference to the flowcharts is not intended to preclude a change or modification to the method or algorithm, and does not mean that any step is necessary or desirable. In an embodiment, at least some of the steps may be performed in parallel, repetitively, or heuristically. In an embodiment, at least some of the steps may be omitted, or other steps may be added.

The various embodiments of the present disclosure may be implemented as software in a machine-readable storage medium. The software may be software for implementing the various embodiments of the present disclosure. The software may be inferred from the various embodiments of the present disclosure by programmers in the art to which the present disclosure belongs. For example, the software may be a program including machine-readable instructions (e.g., code or code segments). The device is able to operate according to instructions called from the storage medium and may be, for example, a computer. In an embodiment, the device may be the electronic device 100 according to the embodiments of the present disclosure. In an embodiment, the processor of the device may execute the called instructions to cause components of the device to perform functions corresponding to the instructions. In an embodiment, the processor may be the processor 120 according to the embodiments of the present disclosure. The storage medium may indicate any type of recording medium capable of being read by the device and on which data is stored. The storage medium may include, for example, a ROM, a RAM, a CD-ROM, a magnetic tape, a floppy disk, optical data storage, etc. In an embodiment, the storage medium may be the memory 110. In an embodiment, the storage medium may be implemented in a distributed form in a computer system or the like connected through a network. The software may be distributed, stored, and executed in a computer system or the like. The storage medium may be a non-transitory storage medium. The non-transitory storage medium indicates a tangible medium that exists, regardless of whether or not data is stored semi-permanently or temporarily, and does not include a signal that is transmitted transitorily.

Although the technical idea of the present disclosure has been described through various embodiments above, the technical idea of the present disclosure encompasses various substitutions, modifications, and changes that may be made within the scope that a person of ordinary skill in the art to which the present disclosure belongs is able to understand. In addition, it should be understood that such substitutions, modifications, and changes can be included within the scope of the appended claims.

## Claims

1. A device comprising:
one or more processors; and
one or more memories configured to store instructions that, when executed by the one or more processors, cause the one or more processors to perform operations,
wherein the one or more processors are configured to:
obtain first data about a component disposed on a board,
determine whether or not a model for a first class corresponding to the first data is stored in the one or more memories,
upon a determination that the model for the first class is stored in the one or more memories, determine whether or not the first data corresponds to the first class using the model,
upon a determination that the model for the first class is not stored in the one or more memories, determine whether or not the first data corresponds to the first class using second data corresponding to the first class, and
transmit information indicating whether or not the first data corresponds to the first class to an external device.

2. The device according to Claim 1,
wherein in determining whether or not the first data corresponds to the first class using the model, the one or more processors are further configured to:
calculate a probability that the first data corresponds to the first class using the model,
determine whether or not the probability is greater than or equal to a predetermined reference probability,
if the probability is greater than or equal to the predetermined reference probability, determine that the first data corresponds to the first class, and
if the probability is less than the predetermined reference probability, determine that the first data does not correspond to the first class.

3. The device according to Claim 2,
wherein the predetermined reference probability is determined using an average value between a minimum value of probabilities of one or more pieces of data determined to correspond to the first class and a maximum value of probabilities of one or more pieces of data determined not to correspond to the first class.

4. The device according to Claim 1,
wherein the one or more processors are further configured to:
calculate a similarity between the first data and the second data using a machine learning algorithm, upon the determination that the model for the first class is not stored in the one or more memories, and
determine whether or not the first data corresponds to the first class based on the similarity between the first data and the second data.

5. The device according to Claim 4,
wherein the machine learning algorithm includes ArcFace (additive angular margin loss).

6. The device according to Claim 4,
wherein the machine learning algorithm is trained using a plurality of pieces of randomly generated virtual data and the second data.

7. The device according to Claim 6,
wherein the plurality of pieces of virtual data are generated by adjusting the sizes, fonts, and thicknesses of letters in one or more pieces of real data stored in the one or more memories, and adding blur and defects thereto.

8. The device according to Claim 6,
wherein the plurality of pieces of virtual data are generated using at least one algorithm among GAN (generative adversarial networks) or stable diffusion.

9. The device according to Claim 1,
wherein the one or more processors are further configured to:
obtain a training request for the first data,
upon obtaining the training request, determine whether or not the model for the first class is stored in the one or more memories,
upon the determination that the model for the first class is not stored in the one or more memories, add the first data to a training queue for generation or training of the model, and
upon the determination that the model for the first class is stored in the one or more memories, add the first data to the training queue if the model for the first class satisfies predetermined conditions.

10. The device according to Claim 9,
wherein when adding the first data to the training queue according to the determination that the model for the first class is not stored in the one or more memories, the one or more processors are further configured to add the first data to the training queue if the number of one or more pieces of data corresponding to the first class, stored in the one or more memories, is greater than a predetermined value and if the first data does not exist in the training queue.

11. The device according to Claim 9,
wherein the predetermined conditions are satisfied if the number of times the model determines that data not corresponding to the first class corresponds to the first class is greater than a first threshold, or if the number of times the model determines that data corresponding to the first class does not correspond to the first class is greater than a second threshold.

12. The device according to Claim 9,
wherein the one or more processors are further configured such that
the model is trained using a data set comprising data corresponding to one or more classes similar to the first class and randomly selected data.

13. The device according to Claim 12,
wherein a ratio of data corresponding to one or more classes similar to the first class in the data set is less than or equal to a ratio of the randomly selected data in the data set.

14. The device according to Claim 1,
wherein the external device is a display, and
wherein the one or more processors are further configured to output, to the display, a phrase indicating that it is impossible to determine whether or not the first data corresponds to the first class according to determination that the model for the first class and the second data corresponding to the class are not stored in the one or more memories.

15. The device according to Claim 1,
wherein the model includes a feature extractor and a classifier.

16. The device according to Claim 15,
wherein the feature extractor is commonly applied to models stored in the one or more memories, and
wherein the classifier is trained based on different information between the models stored in the one or more memories.

17. The device according to Claim 15,
wherein the feature extractor is trained using a plurality of pieces of randomly generated virtual data.

18. The device according to Claim 15,
wherein the feature extractor and the classifier operate on a GPU (graphics processing unit), and
wherein the one or more processors are further configured to:
load a classifier, included in a model of a class used with a frequency equal to or greater than a predetermined value from the memory, to a cache of the GPU, and
determine whether or not data corresponds to a class using the feature extractor and the classifier loaded into the cache.

19. The device according to Claim 18,
wherein the one or more processors are further configured to select a least-used classifier from among one or more classifiers loaded into the cache and remove the same from the cache.

20. The device according to Claim 1,
wherein the one or more processors are further configured to:
transmit information indicating that the first data does not correspond to the first class to a review station based on determination that the first data does not correspond to the first class.

21. A method performed in a device comprising one or more processors and one or more memories storing instructions to be executed by the one or more processors, the method comprising:
obtaining first data indicating a component disposed on a board;
determining whether or not a model for a first class corresponding to the first data is stored in the one or more memories;
upon the determination that the model for the first class is stored in the one or more memories, determining whether or not the first data corresponds to the first class using the model;
upon the determination that the model for the first class is not stored in the one or more memories, determining whether or not the first data corresponds to the first class using second data corresponding to the first class; and
transmitting information indicating whether or not the first data corresponds to the first class to an external device.

22. A non-transitory computer-readable recording medium having recorded instructions that, when executed by one or more processors, cause the one or more processors to perform operations,
wherein the instructions cause the one or more processors to:
obtain first data indicating a component disposed on a board;
determine whether or not a model for a first class corresponding to the first data is stored in one or more memories;
upon the determination that the model for the first class is stored in the one or more memories, determine whether or not the first data corresponds to the first class using the model;
upon the determination that the model for the first class is not stored in the one or more memories, determine whether or not the first data corresponds to the first class using second data corresponding to the first class; and
transmit information indicating whether or not the first data corresponds to the first class to an external device.
